(19) Europäisches Patentamt

European Patent Office

Office européen des brevets

(11) EP 3 994 505 B1

(12) EUROPEAN PATENT SPECIFICATION

(45) Date of publication and mention
of the grant of the patent:
**10.09.2025 Bulletin 2025/37**

(21) Application number: **19753272.4**

(22) Date of filing: **31.07.2019**

(51) International Patent Classification (IPC):
*G02B 1/00* (2006.01)     *G02B 27/09* (2006.01)
*G02B 13/00* (2006.01)     *G02B 13/02* (2006.01)

(52) Cooperative Patent Classification (CPC):
**G02B 1/002; G02B 13/0065; G02B 27/0944**

(86) International application number:
**PCT/EP2019/070639**

(87) International publication number:
**WO 2021/018394 (04.02.2021 Gazette 2021/05)**

(54) **A LIGHT DEFLECTING DEVICE, AN IMAGING DEVICE, AND AN ELECTRONIC DEVICE**

LICHTABLENKVORRICHTUNG, BILDGEBUNGSVORRICHTUNG UND ELEKTRONISCHE
VORRICHTUNG

DISPOSITIF DE DÉVIATION DE LUMIÈRE, DISPOSITIF D'IMAGERIE ET DISPOSITIF
ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.05.2022 Bulletin 2022/19**

(73) Proprietor: **Huawei Technologies Co., Ltd.
Longgang District
Shenzhen,
Guangdong 518129 (CN)**

(72) Inventors:
• **HEGELS, Ernst
80992 Munich (DE)**
• **CASTRO LOPEZ, Marta
80992 Munich (DE)**
• **CHEN, Kai
80992 Munich (DE)**
• **CHIANG, Yita
80992 Munich (DE)**
• **LIU, Chunquan
80992 Munich (DE)**
• **MANSSEN, Daniel
80992 Munich (DE)**
• **TU, Yunhua
80992 Munich (DE)**

(74) Representative: **Roth, Sebastian
Mitscherlich PartmbB
Patent- und Rechtsanwälte
Karlstraße 7
80333 München (DE)**

(56) References cited:
WO-A1-00/55676          WO-A1-2015/134174
WO-A1-2018/222944          WO-A2-2016/140720
US-A1- 2009 005 112

**Description**

TECHNICAL FIELD

The present invention relates generally to the field of optics, and particularly to devices for light deflection. The invention presents a light deflecting device, which can be used in an imaging device and/or in an electronic device. The light deflecting device includes a light deflecting element (e.g., a wavefront deflecting mirror) that allows compressing or decompressing the widths of a light beam and/or allows expanding or shrinking a Field of View (FOV) angle of one or more light beams.

BACKGROUND

Conventional imaging devices, such as cameras, achieve large tele-magnification by using large entrance apertures and large focal distances. This is required because of the intrinsic relation between the aperture size of an optical system, its focal length, and its maximum magnification. When such a conventional imaging device is incorporated into a mobile device, e.g. phone, in order to achieve a FOV angle of less than 10°, the typical length of the optical system needs to be at least 30mm, and the required clear aperture of the lenses usually exceeds the height of the mobile device. That is, the conventional imaging device for tele-magnification is too large to fit inside the mobile device.

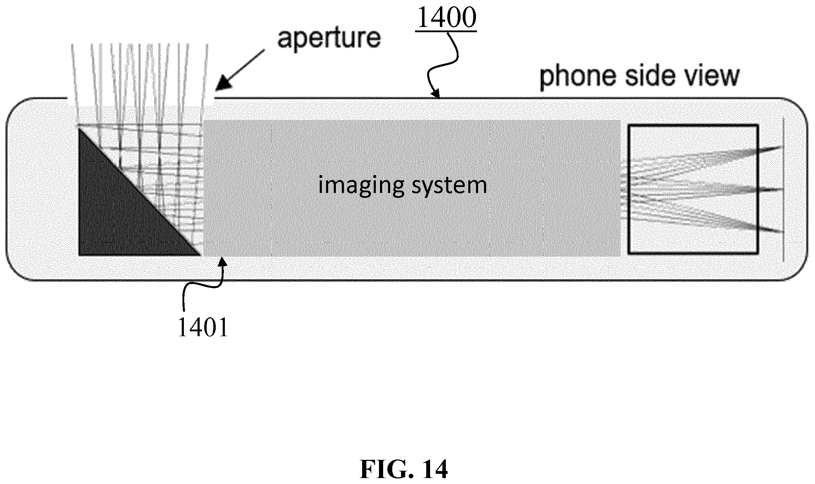

An exemplary solution to fit a tele-camera into a thin mobile phone involves the use of folding optics, i.e., arranging a 45° mirror below the entrance aperture that bends the light towards the optical system, which is oriented perpendicular to this aperture (see FIG. 14).

FIG. 14 schematically illustrates a conventional tele-camera 1401 included in a conventional mobile phone 1400. In the conventional tele-camera 1401, the imaging system focuses the image on an image sensor of the tele-camera 1401. The effective focal length of such a system is the same as in common cameras, however, the light path is bent by 90 ° to follow the profile of the mobile phone 1400.

Furthermore, in such a folded optical system, the size of the applied aperture determines the size of the mirror. Moreover, since the law of reflection states that the incident angle in a mirror is the same as the reflected angle, the height of the optical system needs to be equal to the aperture size. This implies that there is an intrinsic correlation between the maximum zoom strength (tele-magnification) and the thickness of the mobile phone. This leads to a limitation of this technology, wherein the minimum FOV angle of the camera that can be fit into a ~ 8 mm thick smartphone is ~ 10°.

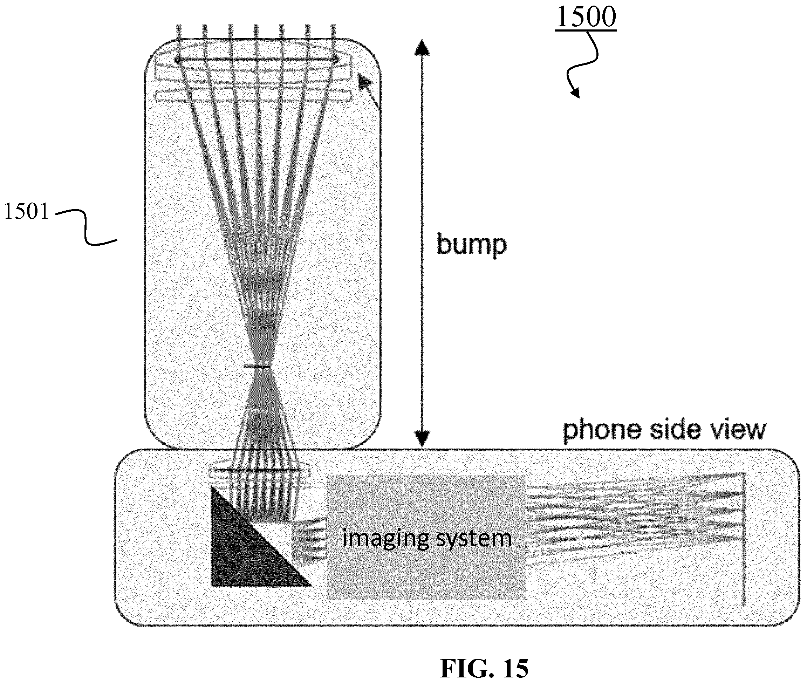

In order to offer larger tele-magnifications, another exemplary solution is to add a so-called camera bump on top of the entrance aperture to fit the required optics. FIG. 15 schematically illustrates in this respect a conventional mobile phone 1500, which includes a camera bump 1501 above the aperture. Since the height of this "bump" 1501 is proportional to the magnification, a larger camera bump is required for a larger magnification.

US 2009/005112 A1 discloses an optical imaging system configuration for handheld devices.

WO 00/55676 A1 compact image display system for eyeglasses or other head-borne frames.

WO 2016/140720 A2 discloses achromatic metasurface optical components by dispersive phase compensation.

WO 2018/222944 A1 discloses planar achromatic and dispersion-tailored meta-surfaces in a visible spectrum.

SUMMARY

In view of these challenges and disadvantages, embodiments of the invention aim to improve the above-described solutions. An objective is to provide a light deflecting device and imaging device, respectively, which allow building an optical system/camera that provides large tele-magnification and is more compact. In particular, a goal is to reach FOV angles of less than 10° with the optical system/camera, while its size is suitable for an electronic device, like a modern smartphone. The need of a camera bump should be eliminated, and a flat backside of the electronic device housing should be possible.

The invention is set out in the appended set of claims. The objective of the present invention is achieved by the embodiments provided in the enclosed independent claims. Advantageous implementations of the embodiments of the invention are further defined in the dependent claims.

A first aspect of the invention involves a light deflecting device for use in an optical system, the light deflecting device comprising a deflecting element configured to receive one or more incident light beams and deflect each incident light beam at least partly to obtain one or more deflected light beams, and change a first width of each incident light beam into a second width of the corresponding deflected light beam, and change a first angle between two incident light beams into a second angle between the corresponding deflected light beams.

The deflecting element may be, for example, a deflecting mirror with a determined/customized deflecting surface. Moreover, the light deflecting device may be, for example, a Wavefront Deflecting Mirror (WDM).

Moreover, the WDM may be, for example, as a type of light deflecting device operating in anomalous reflection and/or transmission.

Each beam of the one or more incident light beams may be considered as a ray bundle with divergence between 0 and 10 diopters, comprising one or more wavelengths. The one or more incident light beams may be polarized or un-polarized, and may further have two main properties, namely a beam width and a beam direction (or incident angle).

The deflection may be a change of the ray direction, after interaction with the deflecting device (or particularly the deflecting element), either by anomalous reflection or anomalous transmission.

The anomalous reflection/transmission may be defined as a reflection or a transmission that does not follow the law of reflection or Snell's law.

The optical system may be an imaging system comprising one or more optical elements which create an image by focusing on an image plane.

In some embodiments, the light deflecting device may include more than one deflecting elements, such as a plurality of wavefront deflecting mirrors, which are able to compress or decompress the beam width(s) by a specific factor and/or to expand or shrink a FOV angle of one or more incident light beams to obtain the deflected light beams. For instance, the deflecting element(s) may take advantage of the ability of meta-surface structures as their deflecting surfaces (or similar technologies), in order to deflect the light of the incident light beams in a non-conventional manner. Thus, the deflecting element(s) can behave, for example, similar to a telescope that can be miniaturized to fit inside a mobile phone.

The meta-surface may be, for example, structured surface (2.5D) constituted by an array of unit cells (called meta-atoms) with a size in the order of tens of nanometers.

In summary, the light deflecting device of the first aspect allows building an optical system/camera (including the light deflecting device) that provides large tele-magnification (FOV angles less than 10°) and is compact enough to fit into an electronic device, like a modern smartphone. The need of a camera bump is thus eliminated, and a flat backside of the electronic device housing becomes possible.

In an implementation form of the first aspect, a deflection angle between each incident light beam and the corresponding deflected light beam is determined by anomalous reflection or anomalous transmission of the incident light beam by the deflecting element.

In some embodiments, the disclosed light deflecting device may be used, for example, to replace the typical folding mirror used in an exemplary mobile phone tele-camera (see FIG: 14). In some embodiments, the disclosed light deflecting device may be based on a setup of a so called wavefront deflecting mirror (WDM).

By controlling the deflection angle between each incident light beam and its corresponding deflected light beam, the light deflecting device becomes even more flexible for designing optical/systems cameras providing tele-magnification, while being very compact.

In the first aspect, the light deflecting device (particularly the light deflecting element) is further configured to compress the first width of the incident light beam into the second width of the corresponding deflected light beam.

The compression factor and the angular response of the light deflecting element may be tuned by design. This allows realizing different magnifications using the same focusing optics just by changing the light deflecting element (e.g. the surface structure of its deflecting surface). At the same time, the width of the incident beam may be customized without sacrificing the focal number of the optical system including the light deflecting device. This provides a unique possibility to implement long focal lengths into an electronic device with very small footprint. In some embodiments, a WDM (e.g., a type of light deflecting device operating in anomalous reflection and/or transmission) may be used, which may allow precisely defining the deflection angle as a function of the incidence angle. In some embodiments, a WDM may be used, which may allow adjusting the compression of the width of one or more incident light beams. In some embodiments, a WDM may be used, which may allow adjusting the deflection angle of an incident light beam as a linear function of the incidence angle.

In a further implementation form of the first aspect, the light deflecting element is further configured to introduce a constant momentum over the entire width of each incident light beam to obtain the corresponding deflected light beam.

The introduced constant momentum may be a momentum that is generally known to the skilled person.

In the first aspect, the light deflecting device is further configured to expand the first angle between the two incident light beams into the second angle between the corresponding deflected light beams.

In a further implementation form of the first aspect, the light deflecting device is further configured to amplify the field of view angle of the one or more received light beams.

In a further implementation form of the first aspect, a beam compressing factor, which is defined based on a ratio of the second width to the first width, is determined by the angle of incidence of the incident light beam on the deflecting element.

According to the invention, the beam compressing factor is in a range of 1.5 to 4.

In some embodiments, the beam compressing factor may be any value (e.g., any value from the range of $\{0, +\text{inf}\}$, and in particular, it may be in the range of 1.5 to 4.

According to the invention, a ratio between an angular expansion factor, which is defined based on the first angle and the second angle, and the beam compressing factor is in a range of 0.7 to 1.3.

In a further implementation form of the first aspect, the light deflecting device is further configured to change the first width into the second width and the first angle into the second angle, but independently from each other.

In a further implementation form of the first aspect, the deflecting element comprises at least one of:

- a meta-surface structure,
- a metamaterial structure,
- a volume hologram,
- a diffractive optical structure,
- a Spatial Light Modulation (SLM) unit.

The metamaterial structure may be, for example, stack of meta-surfaces.

This is beneficial, since the deflecting element may be flexibly designed by volume or surface structuring. Moreover, the deflection by the deflection element may be achieved with meta-surface structure, holography, diffraction, or spatial light modulation unit.

In a further implementation form of the first aspect, the deflecting element comprises the meta-surface structure, and an angular expansion factor, which is defined based on the first angle and the second angle, is determined by the meta-surface structure. The meta-surface may be, for example, structured surface (2.5D) constituted by an array of unit cells (called meta-atoms) with a size in the order of tens of nanometers.

In some embodiments, the meta-surface design may be based on achieving the same deflection angle for a tilted meta-surface, by linearly increasing the phase response in one direction. In some embodiments, the meta-surface design may be based on an engineering of an angular response of a meta-surface relative to incident angle (directional response) to increase the FOV of an incident light beam.

In a further implementation form of the first aspect, the meta-surface structure comprises a plurality of meta-atoms, each meta-atom having a size in the order of a wavelength of the light of the one or more light beams, and the meta-surface structure being configured to modify an incident wavefront of each light beam based on locally adding a predefined momentum by each specific meta-atom to the wavefront.

The invention provides an imaging device comprising at least one light deflecting device according to the first aspect or one of the implementation form of the first aspect.

The imaging device may be, for example, an imaging camera, a tele-camera, etc. The imaging device may comprise a circuitry. The imaging device, because it includes the light deflecting device of the first aspect, may be built very compact, i.e. it can fit into an electronic device like a modern smartphone.

In an implementation form of the second aspect, the imaging device further comprising an aperture configured to pass one or more light beams, at least one light deflecting device according to the first aspect or one of the implementation form of the first aspect, configured to receive the one or more incident light beams passed by the aperture and deflect each incident light beam at least partly to obtain the one or more deflected light beams, an optical system configured to fold the deflected one or more light beams and form an optical image, and an image sensor configured to generate an image based on obtaining the deflected one or more light beams.

The present disclosure is not limited to a specific location of the aperture in the imaging system. For example, in some embodiments, the aperture may be located, e.g., at the beginning of the imaging device, in the middle of the imaging device, at the end of the imaging device, etc. Note that, the used location of the aperture in the imaging device of the present invention is merely an example for illustration purpose, and the present disclosure is not limited to a specific structure, configuration, etc.

In a further implementation form of the second aspect, the imaging device further comprising a first light deflecting device with a first deflection axis (X) according to the first aspect or one of the implementation form of the first aspect configured to, on its corresponding first deflection axis (X) compress the first width of an incident light beam into the second width of the corresponding deflected light beam, and/or expand the first angle between two incident light beams into a second angle between the corresponding deflected light beams, and/or a second light deflecting device with a second deflection axis (Y) according to the first aspect or one of the implementation form of the first aspect configured to, on its corresponding second deflection axis (Y) compress the first width of an incident light beam into the second width of the corresponding deflected light beam, and/or expand the first angle between two incident light beams into a second angle between the corresponding deflected light beams.

In particular, different properties in x- and y-direction may be customized by using one or two deflecting elements or light deflecting devices. Moreover, by using different compression factors in x- and y-direction, it may be possible to design an anamorphic optics.

For example, the deflection axis X and/or the deflection axis Y may be the main axis of the image sensor.

In a further implementation form of the second aspect, a beam compressing factor, which is defined based on a ratio of the second width to the first width, is different for the first light deflecting device than for the second light deflecting device, and/or an angular expansion factor, which is defined based on the first angle and the second angle, is different for the first light deflecting device than for the second light deflecting device.

According to the invention, the imaging device has a height of less than 8 mm and/or is configured to achieve a field of view angle of less than 10°.

In a further implementation form of the second aspect, the first deflection axis (X) is cascaded-orthogonal to the second deflection axis (Y).

A third aspect of the disclosure provides an electronic device, in particular mobile phone, comprising an imaging device according to the second aspect or one of the implementation form of the second aspect.

The electronic device may be, for example, a laptop, a tablet, a smartphone, a smartwatch, a drone, a telescope, a microscopes, a vehicle, a smart glass, a display, a television, etc.

The electronic device may be the mobile phone, a microscope, a telescope, etc.

The mobile phone may comprise the imaging system (e.g., a tele-camera) using one or two light deflecting devices of the first aspect to achieve one or more of:

- FOV angles < 10°.
- Camera system height of less than 8mm.
- Improving the collection of light by using larger apertures.
- Using a wavefront deflecting mirror in front of a fully functional camera lens which may allow having a low focal number together with high focal length.

The electronic device does not require a camera bump, and its housing can have a flat backside. The electronic device may comprise a circuitry. The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

A fourth aspect of the disclosure provides a method for a light deflecting device for use in an optical system, the light deflecting device comprising a deflecting element, the method comprising receiving one or more incident light beams and deflecting each incident light beam at least partly to obtain one or more deflected light beams, and changing a first width of each incident light beam into a second width of the corresponding deflected light beam, and/or changing a first angle between two incident light beams into a second angle between the corresponding deflected light beams.

In an implementation form of the fourth aspect, the method further comprises determining a deflection angle between each incident light beam and the corresponding deflected light beam, by anomalous reflection or anomalous transmission of the incident light beam by the deflecting element.

In a further implementation form of the fourth aspect, the method further comprises compressing the first width of the incident light beam into the second width of the corresponding deflected light beam.

In a further implementation form of the fourth aspect, the method further comprises introducing a constant momentum over the entire width of each incident light beam to obtain the corresponding deflected light beam.

In a further implementation form of the fourth aspect, the method further comprises expanding the first angle between the two incident light beams into the second angle between the corresponding deflected light beams.

In a further implementation form of the fourth aspect, the method further comprises amplifying the field of view angle of the one or more received light beams.

In a further implementation form of the fourth aspect, the method further comprises determining a beam compressing factor, which is defined based on a ratio of the second width to the first width, by the angle of incidence of the incident light beam on the deflecting element.

In a further implementation form of the fourth aspect, the beam compressing factor is in a range of 1.5 to 4.

In some embodiments, the beam compressing factor may be any value (e.g., any value from the range of {0,+inf}, and in particular, it may be in the range of 1.5 to 4.

In a further implementation form of the fourth aspect, a ratio between an angular expansion factor, which is defined based on the first angle and the second angle, and the beam compressing factor is in a range of 0.7 to 1.3.

In a further implementation form of the fourth aspect, the method further comprises changing the first width into the second width and the first angle into the second angle, but independently from each other.

In a further implementation form of the fourth aspect, the deflecting element comprises at least one of:

- a meta-surface structure,
- a metamaterial structure,
- a volume hologram,
- a diffractive optical structure,
- a SLM unit.

In a further implementation form of the fourth aspect, the deflecting element comprises the meta-surface structure, and the method further comprises determining an angular expansion factor, which is defined based on the first angle and the second angle, by the meta-surface structure.

In a further implementation form of the fourth aspect, the meta-surface structure comprises a plurality of meta-atoms, each meta-atom having a size in the order of a wavelength of the light of the one or more light beams, and the method further comprises modifying an incident wavefront of each light beam based on locally adding a predefined momentum by each specific meta-atom to the wavefront.

The method of the fourth aspect achieves all the advantages mentioned above for the first, second and third aspect.

BRIEF DESCRIPTION OF DRAWINGS

The above described aspects and implementation forms of the present invention will be explained in the following description of specific embodiments in relation to the enclosed drawings, in which

FIG. 1          is a schematic view of a light deflecting device comprising a deflecting element, according to an embodiment of the invention;

FIG. 2          is a schematic view of an imaging device comprising the light deflecting device, according to an embodiment of the invention;

FIG. 3          is a schematic view of an electronic device comprising the imaging device, according to an embodiment of the invention;

FIG. 4          is a schematic view of the light reflecting device being exemplarily based on a wavefront-deflecting mirror, according to an embodiment of the invention;

FIG. 5          is a schematic view of following the Lagrange invariance condition by a classical telescope;

FIG. 6          illustrates a design solution space representing the performance of the light reflecting device not being restricted by the Lagrange invariance condition;

FIG. 7          is a schematic view of the light reflecting device compressing the first width of the incident light beam into the second width of the corresponding deflected light beam;

FIG. 8          is a schematic view of the light reflecting device expanding the first angle between the two incident light beams into the second angle between the corresponding deflected light beams;

FIG. 9          schematically illustrates a collective wavefront response of an arrangement of meta-atoms with different phase and amplitude responses;

FIG. 10a and b    schematically illustrate a normal reflection (FIG. 10a) and the anomalous reflection and transmission (FIG. 10b) by using meta-surface structure;

FIG. 11         is an exemplary diagram of phase map for increasing the deflection angle of a reflected beam by a constant factor;

FIG. 12         is a schematic view of the electronic device being exemplarily a WDM telescope;

FIG. 13         is a flowchart of a method for a light deflecting device comprising a deflecting element, according to an embodiment of the invention;

FIG. 14         schematically illustrates a conventional tele-camera included in a conventional mobile phone; and

FIG. 15         schematically illustrates a conventional mobile phone including a camera bump above the aperture.

DETAILED DESCRIPTION OF EMBODIMENTS

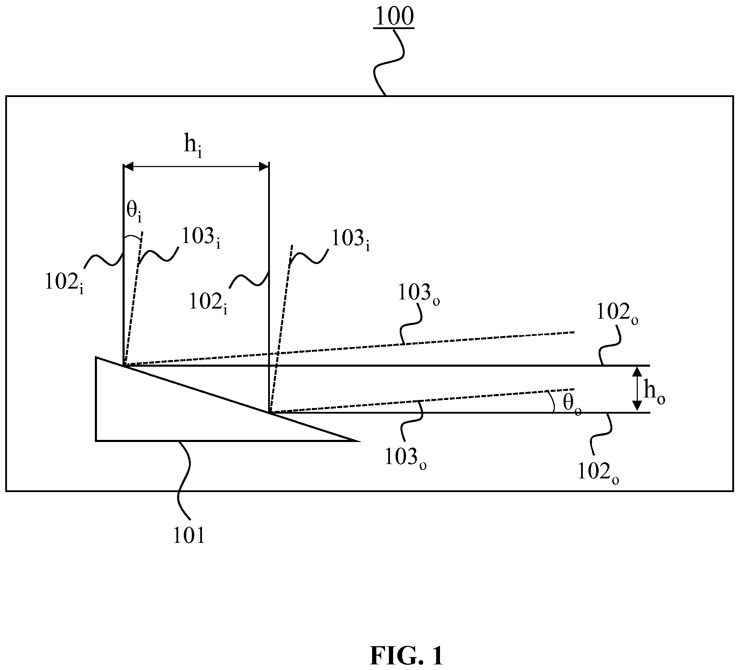

FIG. 1 is a schematic view of a light deflecting device 100 comprising a deflecting element 101, according to an embodiment of the invention.

The light deflecting device 100 may be used in an optical system (not shown in FIG. 1). Further, the light deflecting device 100 comprises a deflecting element 101, which is configured to receive one or more incident light beams $102_i$, $103_i$, and deflect each incident light beam $102_i$, $103_i$ at least partly, in order to obtain one or more (corresponding) deflected light beams $102_o$, $103_o$.

The deflecting element 101 is further configured to change a first width $h_i$ of each incident light beam $102_i$ into a second width $h_o$ of the corresponding deflected light beam $102_o$, and/or to change a first angle $\theta_i$ between two incident light beams $102_i$, $103_i$ into a second angle $\theta_o$ between the corresponding deflected light beams $102_o$, $103_o$. That is, the deflecting element 101 may either change the width of each incident light beam, or change the angle between two incident light beams, or both, i.e. change the width of each incident light beam and an angle between two incident light beams.

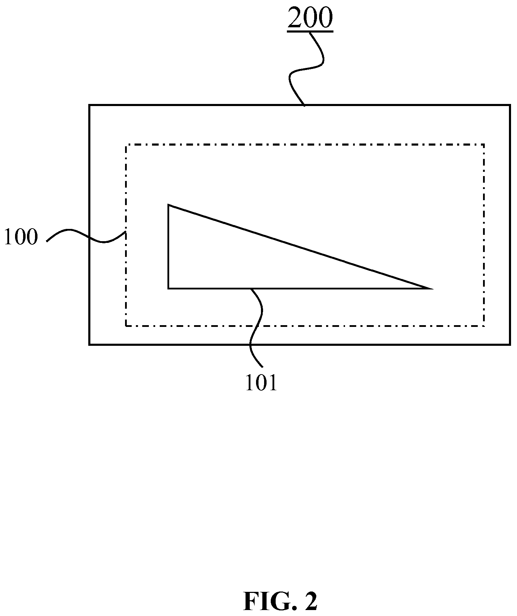

FIG. 2 shows a schematic view of an imaging device 200 comprising the light deflecting device 100, according to an embodiment of the invention.

The imaging device 200 of FIG. 2 is exemplarily based on a tele-camera. The imaging device 200 includes the light reflecting device 100. The light reflecting device 100 of the imaging device 200 includes the deflecting element 101. The imaging device 200 may comprise a circuitry (not shown in FIG. 2). The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the imaging device to perform the operations or methods described herein.

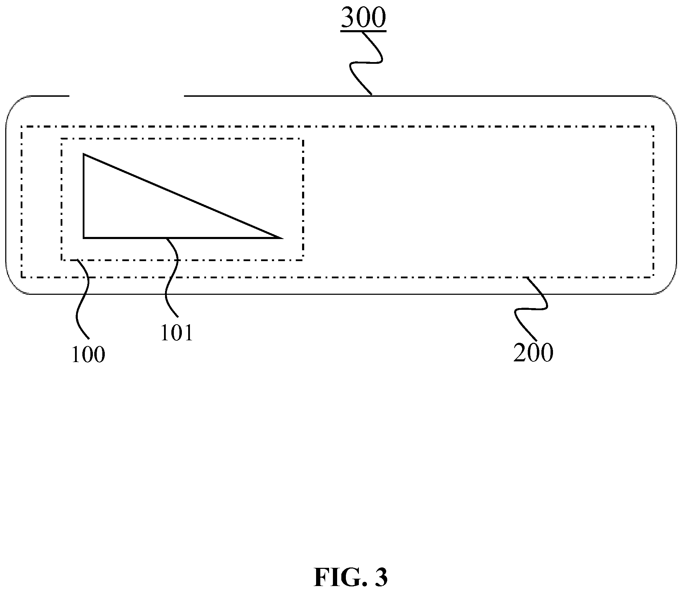

FIG. 3 shows a schematic view of an electronic device 300 comprising the imaging device 200, according to an embodiment of the invention.

The electronic device 300 of FIG. 3 is exemplarily based on a mobile phone. The electronic device 300 includes the imaging device 200. The imaging device 200 (of the electronic device 300) includes the light reflecting device 100. The light reflecting device 100 of the imaging device 200 includes the deflecting element 101. The electronic device 300 may comprise a circuitry (not shown in FIG. 3). The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the electronic device to perform the operations or methods described herein.

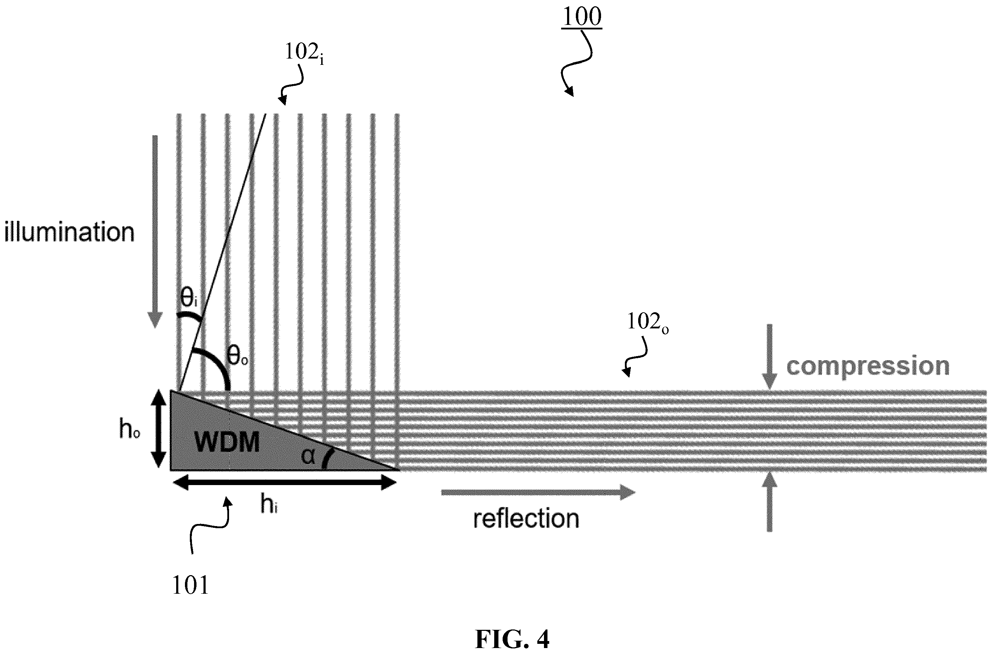

FIG. 4 shows a schematic view of the light reflecting device 100, which is exemplarily based on a WDM, according to an embodiment of the invention.

In some embodiments, in order to overcome the disadvantage of conventional solutions and devices, it is proposed to replace the folding mirror of an optical system (see e.g. FIG. 14) by the light deflecting device 100 (e.g., the WDM) e.g. of FIG. 4. The light deflecting device 100 (e.g., the WDM) of FIG. 4 may be realized using different technologies including meta-surface structures/metamaterials, holograms, diffractive optics, SLM, etc. The main requirement is to have the ability to modify the wavefront of electromagnetic waves in a controlled manner.

The basic property of the light deflecting device 100 (e.g., the WDM) may be a customized deflection angle that can be realized. For the classical planar surface, the reflection angle is equal to the incident angle of a plane wavefront. This is also known as the law of reflection.

For the light deflecting devices 100 (e.g., the WDM) this law of reflection is not necessarily fulfilled anymore. As illustrated in FIG. 4, if an incident plane wave with an incident angle $\theta$ is reflected at the light deflecting device 100, the reflected plane wave may propagate along a deflection angle that can be customized by e.g. a meta-surface, a diffractive structure, a volume hologram, etc.

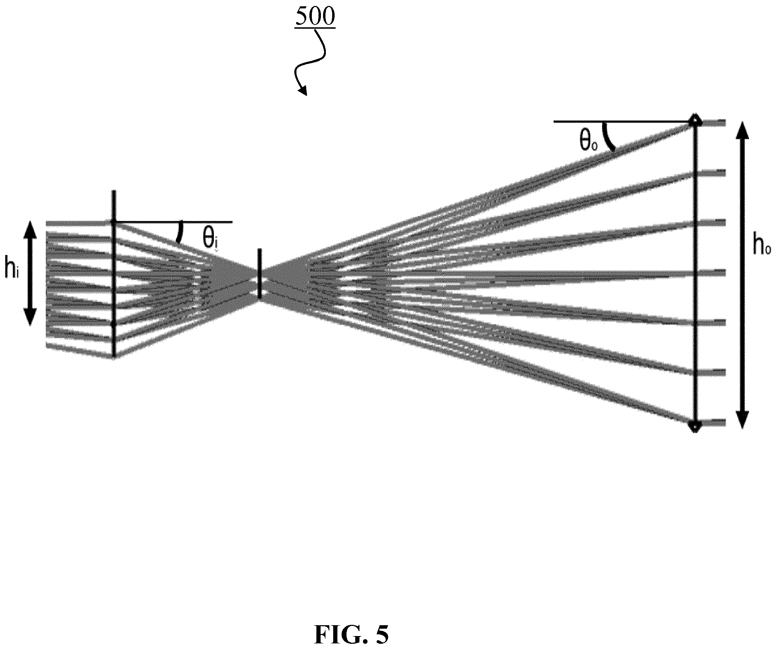

FIG. 5 shows a schematic view of a classical telescope 500 following the Lagrange invariance condition.

The violation of the law of reflection has also a significant impact on another fundamental law of geometrical optics. For example, a classical refractive or reflective optical imaging system follows the Lagrange invariance condition according to Eq. 1 below:

$$n_o y_o \, \tan \theta_o = n_i y_i \, \tan \theta_i \qquad \text{(Eq. 1)}$$

wherein the index i corresponds to the incident light beam(s) and the index o corresponds to the deflected (output) light beam(s).

This Lagrange Invariance condition of Eq. 1 can be rewritten as:

$$M_h \times M_\theta = 1 \qquad\qquad (Eq.\ 2)$$

where $M_h$ is the transverse beam magnification (invers of the beam compression factor) defined as $M_h = \dfrac{h_o}{h_i}$ and $M_\theta$ is the angular magnification $M_\theta = \dfrac{n_o \tan\theta_o}{n_i \tan\theta_i}$ . Thus in a classical optical system, transverse and angular magnifications $M_h$ and $M_\theta$ are coupled and can not be chosen independently from each other. Consequently only $M_h$ or $M_\theta$ can be chosen free and the other one follows directly from Eq. 2, e.g., for a classical Galilean or Keplerian telescope layout, it can be possible to either choose the transverse magnification factor (= beam magnification) or the angular magnification freely.

The wavefront-deflections that can be performed by the light deflecting device 100 (e.g., including a WDM) are not constrained by Eq. 2. Thus the light deflecting device 100 can violate the Lagrange invariance, and thus $M_h$ and $M_\theta$ can be chosen independently. The transverse beam magnification $M_h$ may be controlled by the tilt angle ($\alpha$) of the light deflecting element 101. Moreover, the $M_\theta$ may be controlled by a wavefront-transformation function, which can be realized e.g., by a meta-surface structure, a diffractive structure or a holographic film, etc., i.e. generally based on a surface structure of the light deflecting element 101.

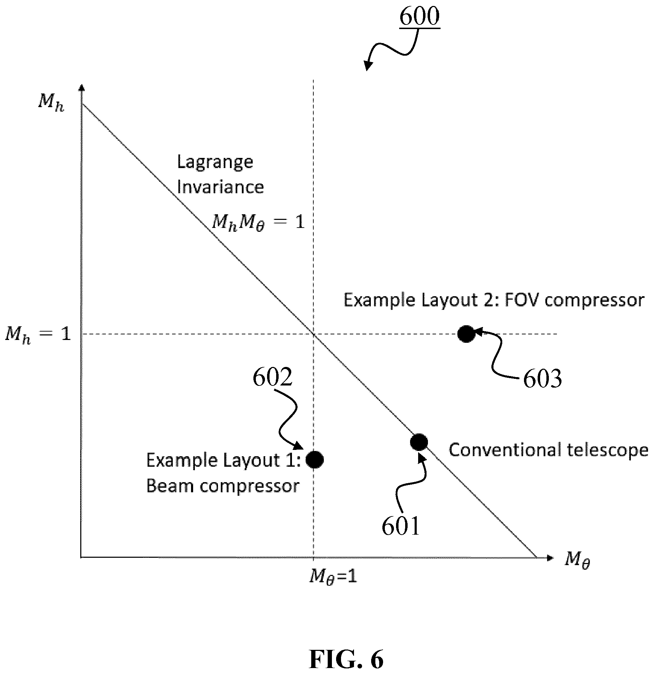

FIG. 6 illustrates a design solution space 600 representing the performance of the light reflecting device 100 not being restricted by the Lagrange invariance condition.

As it can be derived from the design solution space 600 of FIG. 6, the wavefront-deflection realized by the light deflecting device 100 (including the light deflecting element 101, e.g. a WDM) are not restricted by the Lagrange invariance (represented by the diagonal line in the design solution space 600 of FIG. 6). The angular and transverse beam magnifications can be chosen, independently. The reference number 601 represents the example of the conventional telescope 500 (shown in FIG. 5).

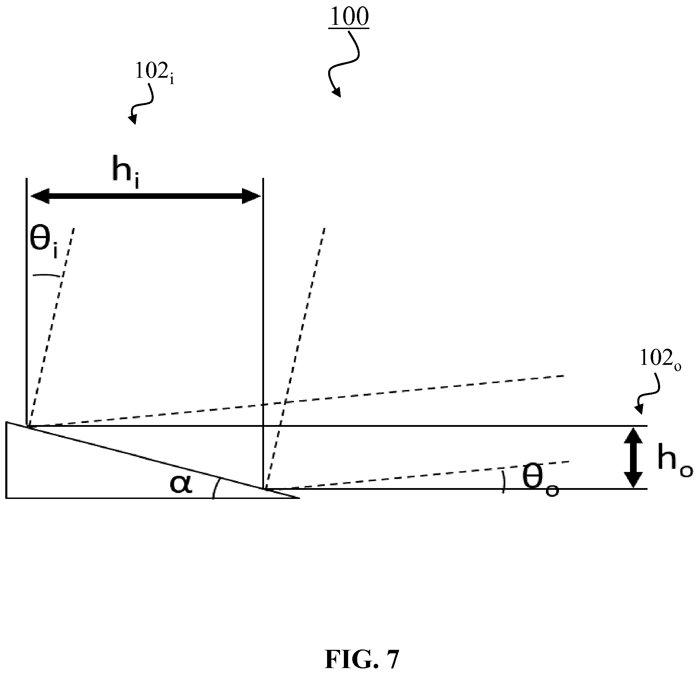

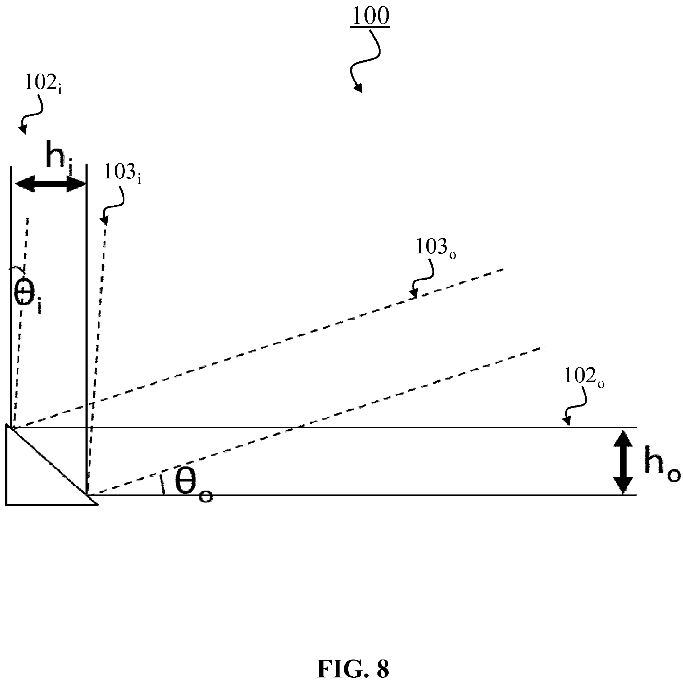

The reference number 602 represents the example of the light deflecting device 100 performing a beam compression (shown in FIG. 7), and the reference number 603 represents the example of the light deflecting device 100 performing a FOV expansion (shown in FIG. 8), respectively.

FIG. 6 shows exemplary scenarios of wavefront-deflections generated by one or more light deflecting elements 101. Only two examples are given in this figure. However, it is also possible to combine these conditions, e.g., generating a transverse beam magnification and angular magnification or de-magnification in parallel. As the light deflecting element(s) 101 are designed for parallel incident light beams (meaning infinite object distance), the minimum spot size which is determined by the diffraction limit is given by the F-number of the conventional imaging system (under the assumption that the overall system's aperture is not the aperture stop of the light deflecting element 101) between the light deflecting element(s) 101 and an image sensor.

In the following, examples of the invention (i.e., beam-compressor and FOV-compressor), are described and accompanied with drawings and technical descriptions. The implementation examples described use a meta-surface as the building block to create the light deflecting element 101. However, similar implementations could be realized using a different technology, e.g., holograms, diffractive structures, etc. In fact, any embodiment described as an "example" is not necessarily superior or better than other embodiments.

FIG. 7 shows a schematic view of the light reflecting device 100 compressing the first width $h_i$ of the incident light beam $102_i$ into the second width $h_o$ of the corresponding deflected light beam $102_o$.

FIG. 8 shows a schematic view of the light reflecting device 100 expanding the first angle $\theta_i$ between the two incident light beams $102_i$, $103_i$ into the second angle $\theta_o$ between the corresponding deflected light beams $102_o$, $103_o$.

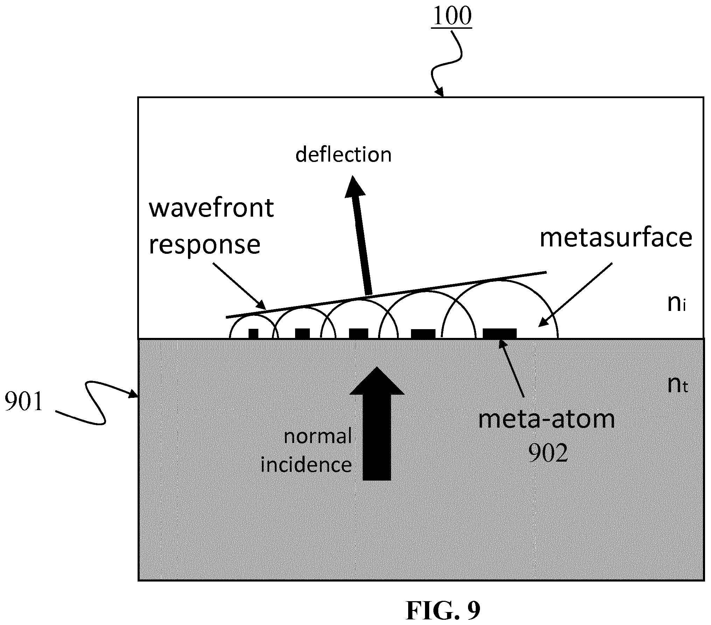

FIG. 9 is a schematic view of a collective wavefront response of an arrangement of meta-atoms 902 on the surface of the light deflecting element 101 with different phase and amplitude responses.

In this section, well-known methods or elements are not explained in detail, however, before describing both examples, an initial basic explanation covering the main operation principles of meta-surfaces structures is presented for clarification purposes.

Meta-surfaces are nanostructured two dimensional (2D) materials designed to have specific functionality. Similar to SLM, the meta-surfaces are able to modify the wavefront of EM waves by locally adding specific momentum to the incident wavefront. Meta-surface unit cell (called meta-atom 902) may have a size in the order of the wavelength of the EM wave. The phase and amplitude of each meta-atom may be designed, e.g., independently, and such that the collective response generates the desired wavefront response (see FIG. 9).

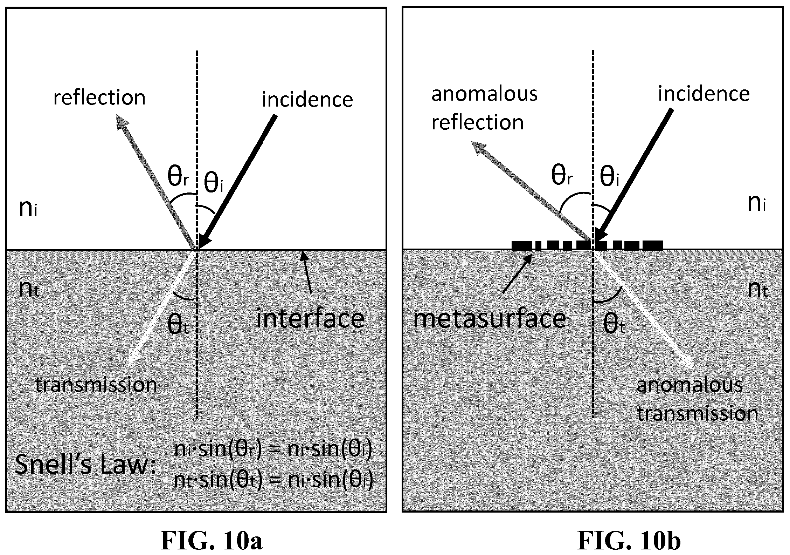

FIG. 10a and FIG. 10b show schematic views of a normal reflection (FIG. 10a) and anomalous reflection and transmission (FIG. 10b) by using meta-surface structure for the light deflecting element 101.

This wavefront engineering allows metasurfaces to have both anomalous reflection and/or transmission. The anomalous reflection/transmission may be defined as a reflection or a transmission that does not follow Snell's law. The typical efficiency of transmission metasurfaces is around 60%. In the case of reflection metasurfaces, this can be increased up to 100% when placed on top of a spacer and metal mirror in metal-insulator-metal (MIM) configurations.

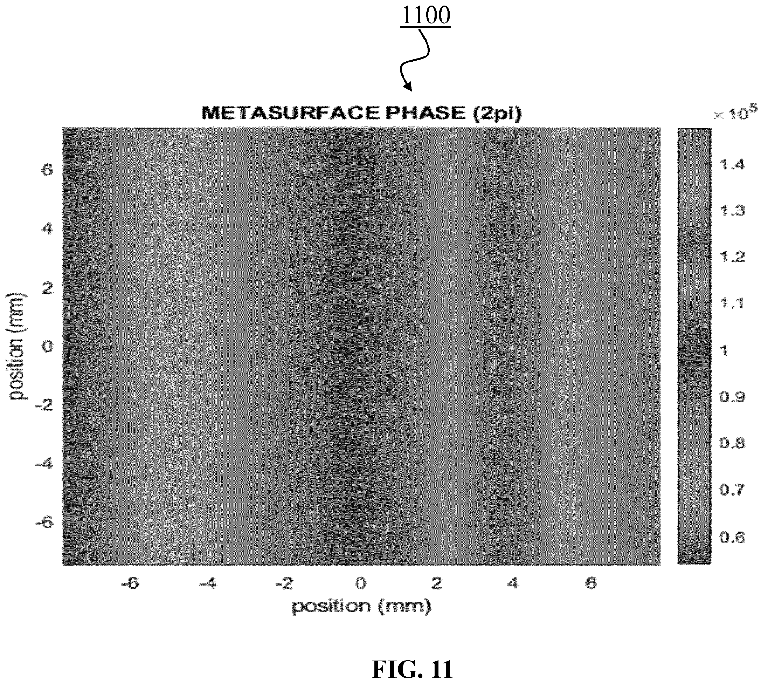

In order to realize the first example, i.e., beam compressor or telescope, the folding mirror used in a state of the art mobile phone 15° tele-camera is replaced by two light deflecting devices 100 (e.g., WDM). The optical function of each light deflecting device 100 would be to compress the beam on a specific axis by a factor ($1/M_h$=3). This ensures that the beam passing through a large aperture ~ 18mm (required for a 5° FOV tele-zoom) can be compressed to fit the thickness of the phone (~8mm). This is achieved by engineering the anomalous reflection of the metasurface such that it adds a constant phase to the incident light to achieve a specific deflection angle. An exemplary phase map of a meta-surface with such functionality is shown in FIG. 11.

FIG. 11 shows an exemplary diagram 1100 of phase map for increasing the deflection angle of a reflected beam by a constant factor.

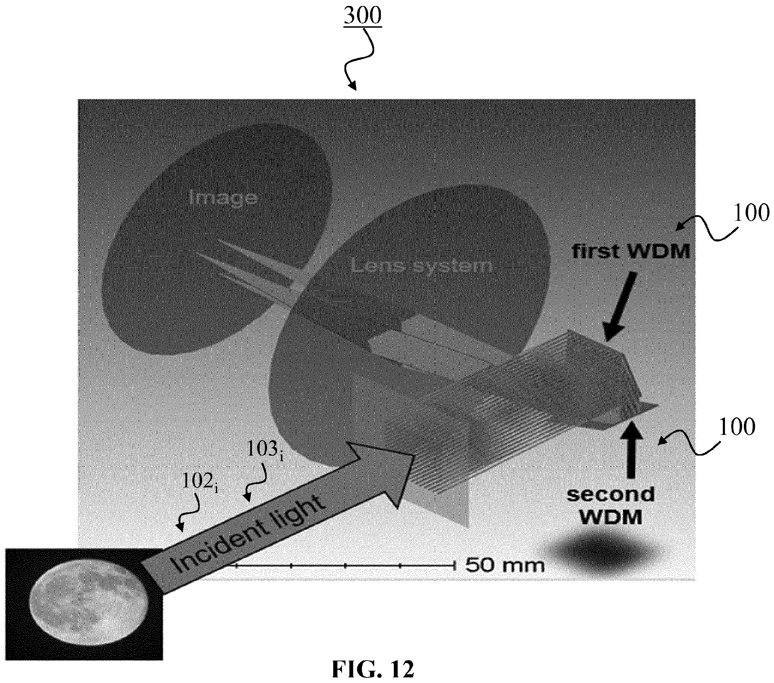

For instance, when placed in a cascaded-orthogonal manner (e.g., in FIG. 12) the beam deflected by two light deflecting devices 100 can be compressed in both axis. The beam will be compressed in the vertical axis by the first the light deflecting device 100 so it can fit the thickness of the phone and in the horizontal direction by the second the light deflecting device 100 so it can be detected by current image sensor sizes with a typical diagonal of 5mm.

FIG. 12 is a schematic view of the electronic device 300 comprising exemplarily a tele-camera. The electronic device 300 of FIG. 12 includes two WDMs in a cascaded-orthogonal manner that compress the beam in both axis.

Note that, as in conventional refractive mirrors, the light deflecting device 100 (e.g., the WDM) can ensure that parallel rays keep parallel once they are reflected. However, contrary to conventional mirrors, to ensure a 90 ° reflection, the angle of the $\alpha$ does not need to be 45° but can be chosen smaller to fit in the thickness of the mobile phone. Furthermore, since the light deflecting device 100 covers the full size of the aperture, by reducing the angle $\alpha$, the compression factor ($1/M_h$) is increased. Moreover, since this compression factor can be tuned during the meta-surface structure's design, the telescope approach offers a solution for multiple magnification strengths using the same focusing optics. This is achievable by increasing the aperture size and the light deflecting device 100 angle.

Besides, considering current phone thicknesses ~ 8 mm, it may be expected that the telescopes will be able to offer field view angles of less than 5° without the need of a camera bump or extra optics.

The second example mentioned, i.e., FOV-expander, can be realized using similar configuration as in the previous example. In order to compress the FOV, the optical response of the light deflecting device 100 (e.g., the WDM) needs to be determined such that it does not affect the beam compression, however, it expands the FOV. To achieve that, the angle of the light deflecting device 100 can be fixed at 45° while the reflecting angle is designed to increase with increasing the incident angle.

Such functionality may be realized with meta-surfaces by engineering the angular response (for angle multiplexing) of the meta-atom instead of the wavelength response (for wavelength achromatization). For example, the use of well designed directional nanoantennas or 2.5D pyramidal structures as meta-atoms may allow designing the deflection angle of the meta-surface as a function of the incident angle. Moreover, it may be possible for the light deflecting device 100 (e.g., the WDM) to change the $M_\theta$ while keeping the $M_h$ = 1. This will allow the FOV to be increased by the light deflecting device 100 (e.g., the WDM), since 0° incident angle is reflected at 90° (as a conventional mirror) and larger incident angles are reflected with increasing angle (by $M_\theta$ factor).

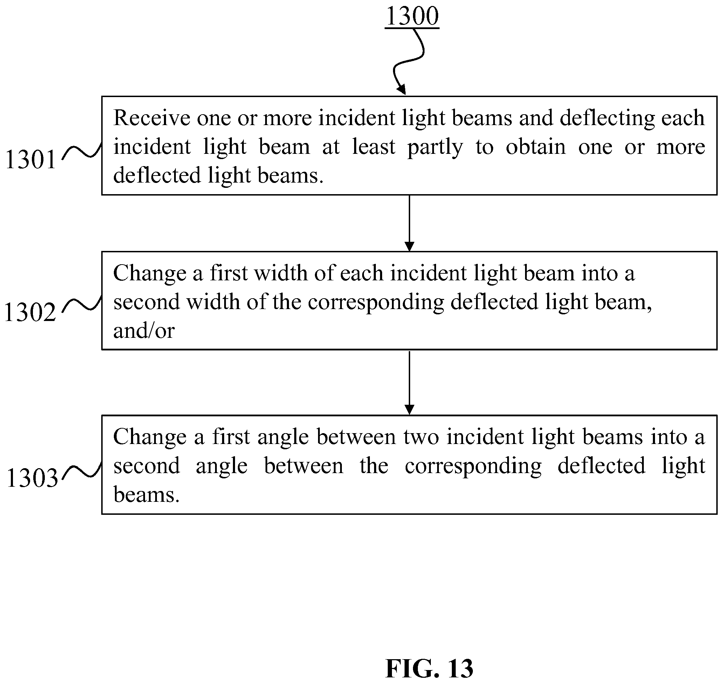

FIG. 13 shows a method 1300 according to an embodiment of the invention for a light deflecting device 100 for use in an optical system, wherein the light deflecting device 100 comprises a deflecting element 101. The light deflecting device 100 may be the one shown in FIG. 1. The method 1300 may be thus be carried out by the light deflecting device 100, as it described above.

The method 1300 comprises a step 1301 of receiving one or more incident light beams $102_i$, $103_i$ and deflect each incident light beam $102_i$, $103_i$ at least partly to obtain one or more deflected light beams $102_o$, $103_o$.

The method 1300 further comprises a step 1302 of changing a first width $h_i$ of each incident light beam $102_i$ into a second width $h_o$ of the corresponding deflected light beam $102_o$, and/or a step 1303 of changing a first angle $\theta_i$ between two incident light beams $102_i$, $103_i$ into a second angle $\theta_o$ between the corresponding deflected light beams $102_o$, $103_o$.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. An imaging device (200) for a mobile phone comprising at least one light deflecting device (100), the light deflecting device (100) comprising a deflecting element (101) configured to:

receive one or more incident light beams ($102_i$, $103_i$) and deflect each incident light beam ($102_i$, $103_i$) at least partly to obtain one or more deflected light beams ($102_o$, $103_o$) for forming an image, and

change a first width ($h_i$) of each incident light beam ($102_i$) into a second width ($h_o$) of the corresponding deflected light beam ($102_o$), and

change a first angle ($\theta_i$) between two incident light beams ($102_i$, $103_i$) into a second angle ($\theta_o$) between the corresponding deflected light beams ($102_o$, $103_o$);

wherein a beam compressing factor, which is defined as the ratio of the first width ($h_i$) to the second width ($h_o$), is determined by the angle of incidence of the incident light beam ($102_i$, $103_i$) on the deflecting element (101) and is in a range of 1.5 to 4,

wherein a ratio between an angular expansion factor, which is defined based on the first angle ($\theta_i$) and the second angle ($\theta_o$), and the beam compressing factor is in a range of 0.7 to 1.3; and

wherein the imaging device (200) has a height of less than 8 mm and/or is configured to achieve a field of view angle of less than 10°.

2. The imaging device (200) according to claim 1, wherein:
a deflection angle between each incident light beam ($102_i$, $103_i$) and the corresponding deflected light beam ($102_o$, $103_o$) is determined by anomalous reflection or anomalous transmission of the incident light beam ($102_i$, $103_i$) by the deflecting element (101).

3. The imaging device (200) according to claim 1 or 2, configured to:
compress the first width ($h_i$) of the incident light beam ($102_i$) into the second width ($h_o$) of the corresponding deflected light beam ($102_o$),

4. The imaging device (200) according to one of the claims 1 to 3, wherein the light deflecting element (101) is further configured to:
introduce a constant momentum over the entire width of each incident light beam ($102_i$, $103_i$) to obtain the corresponding deflected light beam ($102_o$, $103_o$).

5. The imaging device (200) according to one of the claims 1 to 4, further configured to:
expand the first angle ($\theta_i$) between the two incident light beams ($102_i$, $103_i$) into the second angle ($\theta_o$) between the corresponding deflected light beams ($102_o$, $103_o$).

6. The imaging device (200) according to claim 5, further configured to:
amplify the field of view angle of the one or more received light beams ($102_i$, $103_i$).

7. The imaging device (200) according to one of the claims 1 to 6, configured to:
change the first width ($h_i$) into the second width ($h_o$) and the first angle ($\theta_i$) into the second angle ($\theta_o$), but independently from each other.

8. The imaging device (200) according to one of the claims 1 to 7, wherein the defecting element (101) comprises at least one of:

a metamaterial structure (901),
a volume hologram,
a diffractive optical structure,
a Spatial Light Modulation, SLM, unit.

9. The imaging device (200) according to any one of claims 1 to 8, wherein:

the deflecting element (101) comprises the meta-surface structure (901), and
an angular expansion factor, which is defined based on the first angle ($\theta_i$) and the second angle ($\theta_o$), is determined by the meta-surface structure (901).

10. The imaging device (200) according to any one of claims 8 or 9, wherein:
the meta-surface structure (901) comprises a plurality of meta-atoms (902), each meta-atom (902) having a size in the order of a wavelength of the light of the one or more light beams, and the meta-surface structure (901) is configured to:
modify an incident wavefront of each light beam ($102_i$, $103_i$) based on locally adding a predefined momentum by each specific meta-atom (902) to the wavefront.

**11.** The imaging device (200) according to one of the claims 1 to 10, further comprising:

an aperture configured to pass one or more light beams,
wherein the at least one light deflecting device (100) is configured to receive the one or more incident light beams ($102_i$, $103_i$) passed by the aperture and deflect each incident light beam ($102_i$, $103_i$) at least partly to obtain the one or more deflected light beams ($102_o$, $103_o$),
an optical system configured to fold the deflected one or more light beams ($102_o$, $103_o$) and form an optical image, and
an image sensor configured to generate an image based on obtaining the deflected one or more light beams ($102_o$, $103_o$).

**12.** The imaging device (200) according to one of the claims 1 to 11, further comprising:

a first light deflecting device (100) with a first deflection axis, X configured to, on its corresponding first deflection axis, X,
compress the first width ($h_i$) of an incident light beam ($102_i$) into the second width ($h_o$) of the corresponding deflected light beam ($102_o$), and/or
expand the first angle ($\theta_i$) between two incident light beams ($102_i$, $103_i$) into a second angle ($\theta_o$) between the corresponding deflected light beams ($102_o$, $103_o$), and/or
a second light deflecting device (100) with a second deflection axis, Y, configured to, on its corresponding second deflection axis, Y,
compress the first width ($h_i$) of an incident light beam ($102_i$) into the second width ($h_o$) of the corresponding deflected light beam ($102_o$), and/or
expand the first angle ($\theta_i$) between two incident light beams ($102_i$, $103_i$) into a second angle ($\theta_o$) between the corresponding deflected light beams ($102_o$, $103_o$).

**13.** The imaging device (200) according to claim 12, wherein:

the beam compressing factor is different for the first light deflecting device than for the second light deflecting device, and/or
an angular expansion factor is different for the first light deflecting device than for the second light deflecting device.

**14.** The imaging device (200) according to claim 12 or 13, wherein:
the first deflection axis, X, is cascaded-orthogonal to the second deflection axis, Y.


**Patentansprüche**

**1.** Bildgebungsvorrichtung (200) für ein Mobiltelefon, die mindestens eine Lichtablenkvorrichtung (100) umfasst, wobei die Lichtablenkvorrichtung (100) ein Ablenkelement (101) umfasst, das konfiguriert ist zum:

Empfangen eines oder mehrerer einfallender Lichtstrahlen ($102_i$, $103_i$) und mindestens teilweisen Ablenken jedes einfallenden Lichtstrahls ($102_i$, $103_i$), um einen oder mehrere abgelenkte Lichtstrahlen ($102_o$, $103_o$) zum Bilden eines Bildes zu erhalten, und
Ändern einer ersten Breite ($h_i$) jedes einfallenden Lichtstrahls ($102_i$) in eine zweite Breite ($h_o$) des entsprechenden abgelenkten Lichtstrahls ($102_o$) und
Ändern eines ersten Winkels ($\theta_i$) zwischen zwei einfallenden Lichtstrahlen ($102_i$, $103_i$) in einen zweiten Winkel ($\theta_o$) zwischen den entsprechenden abgelenkten Lichtstrahlen ($102_o$, $103_o$);
wobei ein Strahlkompressionsfaktor, der als Verhältnis der ersten Breite ($h_i$) zu der zweiten Breite ($h_o$) definiert ist, durch den Einfallswinkel des einfallenden Lichtstrahls ($102_i$, $103_i$) auf das Ablenkelement (101) bestimmt wird und in einem Bereich von 1,5 bis 4 liegt,
wobei ein Verhältnis zwischen einem basierend auf dem ersten Winkel ($\theta_i$) und dem zweiten Winkel ($\theta_o$) definierten Winkelerweiterungsfaktor und dem Strahlkompressionsfaktor in einem Bereich von 0,7 bis 1,3 liegt; und
wobei die Bildgebungsvorrichtung (200) eine Höhe von weniger als 8 mm aufweist und/oder konfiguriert ist, um einen Sichtfeldwinkel von weniger als 10° zu erreichen.

2.  Bildgebungsvorrichtung (200) nach Anspruch 1, wobei:
    ein Ablenkwinkel zwischen jedem einfallenden Lichtstrahl ($102_i$, $103_i$) und dem entsprechenden abgelenkten Lichtstrahl ($102_o$, $103_o$) durch anomale Reflexion oder anomale Transmission des einfallenden Lichtstrahls ($102_i$, $103_i$) durch das Ablenkelement (101) bestimmt wird.

3.  Bildgebungsvorrichtung (200) nach Anspruch 1 oder 2, die konfiguriert ist zum: Komprimieren der ersten Breite ($h_i$) des einfallenden Lichtstrahls ($102_i$) in die zweite Breite ($h_o$) des entsprechenden abgelenkten Lichtstrahls ($102_o$),

4.  Bildgebungsvorrichtung (200) nach einem der Ansprüche 1 bis 3, wobei das Lichtablenkelement (101) ferner konfiguriert ist zum:
    Beaufschlagen eines konstanten Impuls über die gesamte Breite jedes einfallenden Lichtstrahls ($102_i$, $103_i$), um den entsprechenden abgelenkten Lichtstrahl ($102_o$, $103_o$) zu erhalten.

5.  Bildgebungsvorrichtung (200) nach einem der Ansprüche 1 bis 4, die ferner konfiguriert ist zum:
    Erweitern eines ersten Winkels ($\theta_i$) zwischen den beiden einfallenden Lichtstrahlen ($102_i$, $103_i$) in den zweiten Winkel ($\theta_o$) zwischen den entsprechenden abgelenkten Lichtstrahlen ($102_o$, $103_o$).

6.  Bildgebungsvorrichtung (200) nach Anspruch 5, die ferner konfiguriert ist zum: Verstärken des Sichtfeldwinkels des einen oder der mehreren empfangenen Lichtstrahlen ($102_i$, $103_i$).

7.  Bildgebungsvorrichtung (200) nach einem der Ansprüche 1 bis 6, die konfiguriert ist zum:
    Ändern der ersten Breite ($h_i$) in die zweite Breite ($h_o$) und des ersten Winkels ($\theta_i$) in den zweiten Winkel ($\theta_o$), jedoch unabhängig voneinander.

8.  Bildgebungsvorrichtung (200) nach einem der Ansprüche 1 bis 7, wobei das Ablenkelement (101) mindestens eines umfasst aus:

    einer Metamaterialstruktur (901),
    einem Volumenhologramm,
    einer diffraktiven optischen Struktur,
    einer Einheit zur räumlichen Lichtmodulation, SLM-Einheit.

9.  Bildgebungsvorrichtung (200) nach einem der Ansprüche 1 bis 8, wobei:

    das Ablenkelement (101) die Meta-Oberflächenstruktur (901) umfasst, und
    ein Winkelerweiterungsfaktor, der basierend auf dem ersten Winkel ($\theta_i$) und dem zweiten Winkel ($\theta_o$) definiert wird, durch die Meta-Oberflächenstruktur (901) bestimmt wird.

10. Bildgebungsvorrichtung (200) nach einem der Ansprüche 8 oder 9, wobei:

    die Meta-Oberflächenstruktur (901) eine Vielzahl von Meta-Atomen (902) umfasst,
    wobei jedes Meta-Atom (902) eine Größe in der Größenordnung einer Wellenlänge des Lichts des einen oder der mehreren Lichtstrahlen aufweist und die Meta-Oberflächenstruktur (901) konfiguriert ist zum:
    Modifizieren einer einfallenden Wellenfront jedes Lichtstrahls ($102_i$, $103_i$) basierend auf dem lokalen Hinzufügen eines vordefinierten Impuls durch jedes spezifische Meta-Atom (902) zu der Wellenfront.

11. Bildgebungsvorrichtung (200) nach einem der Ansprüche 1 bis 10, die ferner umfasst:

    eine Blende, die dazu konfiguriert ist, einen oder mehrere Lichtstrahlen durchzulassen,
    wobei die mindestens eine Lichtablenkvorrichtung (100) dazu konfiguriert ist, den einen oder die mehreren einfallenden Lichtstrahlen ($102_i$, $103_i$), die durch die Blende durchgelassen wurden, zu empfangen und jeden einfallenden Lichtstrahl ($102_i$, $103_i$) mindestens teilweise abzulenken, um den einen oder die mehreren abge-lenkten Lichtstrahlen ($102_o$, $103_o$) zu erhalten,
    ein optisches System, das dazu konfiguriert ist, den abgelenkten Lichtstrahl ($102_o$, $103_o$) zu falten und ein optisches Bild zu erzeugen, und
    einen Bildsensor, der dazu konfiguriert ist, basierend auf dem Erhalten des einen oder der mehreren abge-senkten Lichtstrahlen ($102_o$, $103_o$) ein Bild zu erzeugen.

12. Bildgebungsvorrichtung (200) nach einem der Ansprüche 1 bis 11, die ferner umfasst:

eine erste Lichtablenkvorrichtung (100) mit einer ersten Ablenkachse X, die dazu konfiguriert ist, auf ihrer entsprechenden ersten Ablenkachse X die erste Breite ($h_i$) eines einfallenden Lichtstrahls ($102_i$) in die zweite Breite ($h_o$) des entsprechenden abgelenkten Lichtstrahls ($102_o$) zu komprimieren und/oder den ersten Winkel ($\theta_i$) zwischen zwei einfallenden Lichtstrahlen ($102_i$, $103_i$) in einen zweiten Winkel ($\theta_o$) zwischen den entsprechenden abgelenkten Lichtstrahlen ($102_o$, $103_o$) zu erweitern und/oder
eine zweite Lichtablenkvorrichtung (100) mit einer zweiten Ablenkachse Y, die dazu konfiguriert ist, auf ihrer entsprechenden zweiten Ablenkachse Y die erste Breite ($h_i$) eines einfallenden Lichtstrahls ($102_i$) in die zweite Breite ($h_o$) des entsprechenden abgelenkten Lichtstrahls ($102_o$) zu komprimieren und/oder den ersten Winkel ($\theta_i$) zwischen zwei einfallenden Lichtstrahlen ($102_i$, $103_i$) in einen zweiten Winkel ($\theta_o$) zwischen den entsprechenden abgelenkten Lichtstrahlen ($102_o$, $103_o$) zu erweitern.

13. Bildgebungsvorrichtung (200) nach Anspruch 12, wobei:

sich der Strahlkompressionsfaktor der ersten Lichtablenkvorrichtung von dem der zweiten Lichtablenkvorrichtung unterscheidet und/oder
sich ein Winkelerweiterungsfaktor der ersten Lichtablenkvorrichtung von dem der zweiten Lichtablenkvorrichtung unterscheidet.

14. Bildgebungsvorrichtung (200) nach Anspruch 12 oder 13, wobei:
die erste Ablenkachse X kaskadiert-orthogonal zu der zweiten Ablenkachse Y verläuft.

**Revendications**

1. Dispositif d'imagerie (200) pour un téléphone mobile comprenant au moins un dispositif de déviation de lumière (100), le dispositif de déviation de lumière (100) comprenant un élément de déviation (101) configuré pour :

recevoir un ou plusieurs faisceaux lumineux incidents ($102_i$, $103_i$) et dévier chaque faisceau lumineux incident ($102_i$, $103_i$) au moins partiellement pour obtenir un ou plusieurs faisceaux lumineux déviés ($102_o$, $103_o$) pour former une image, et changer une première largeur ($h_i$) de chaque faisceau lumineux incident ($102_i$) en une seconde largeur ($h_o$) du faisceau lumineux dévié ($102_o$) correspondant, et
changer un premier angle ($\theta_i$) entre deux faisceaux lumineux incidents ($102_i$, $103_i$) en un second angle ($\theta_o$) entre les faisceaux lumineux déviés ($102_o$, $103_o$) correspondants ;
dans lequel un facteur de compression de faisceau, qui est défini comme le rapport entre la première largeur ($h_i$) et la seconde largeur ($h_o$), est déterminé par l'angle d'incidence du faisceau lumineux incident ($102_i$, $103_i$) sur l'élément de déviation (101) et se situe dans une plage allant de 1,5 à 4,
dans lequel un rapport entre un facteur d'expansion angulaire, qui est défini en fonction du premier angle ($\theta_i$) et du second angle ($\theta_o$), et le facteur de compression de faisceau se situe dans une plage allant de 0,7 à 1,3 ; et
dans lequel le dispositif d'imagerie (200) a une hauteur inférieure à 8 mm et/ou est configuré pour obtenir un angle de champ de vision inférieur à 10°.

2. Dispositif d'imagerie (200) selon la revendication 1, dans lequel :
un angle de déviation entre chaque faisceau lumineux incident ($102_i$, $103_i$) et le faisceau lumineux dévié ($102_o$, $103_o$) correspondant est déterminé par une réflexion anormale ou une transmission anormale du faisceau lumineux incident ($102_i$, $103_i$) par l'élément de déviation (101).

3. Dispositif d'imagerie (200) selon la revendication 1 ou 2, configuré pour : comprimer la première largeur ($h_i$) du faisceau lumineux incident ($102_i$) en seconde largeur ($h_o$) du faisceau lumineux dévié ($102_o$) correspondant.

4. Dispositif d'imagerie (200) selon l'une des revendications 1 à 3, dans lequel l'élément de déviation de lumière (101) est en outre configuré pour :
introduire une impulsion constante sur toute la largeur de chaque faisceau lumineux incident ($102_i$, $103_i$) pour obtenir le faisceau lumineux dévié ($102_o$, $103_o$) correspondant.

5. Dispositif d'imagerie (200) selon l'une des revendications 1 à 4, configuré en outre pour :
élargir le premier angle ($\theta_i$) entre les deux faisceaux lumineux incidents ($102_i$, $103_i$) dans le second angle ($\theta_o$) entre les

faisceaux lumineux déviés ($102_o$, $103_o$) correspondants.

6. Dispositif d'imagerie (200) selon la revendication 5, configuré en outre pour :
amplifier l'angle de champ de vision du ou des faisceaux lumineux ($102_i$, $103_i$) reçus.

7. Dispositif d'imagerie (200) selon l'une des revendications 1 à 6, configuré pour : changer la première largeur ($h_i$) en seconde largeur ($h_o$) et le premier angle ($\theta_i$) en second angle ($\theta_o$), mais indépendamment l'un de l'autre.

8. Dispositif d'imagerie (200) selon l'une des revendications 1 à 7, dans lequel l'élément de déviation (101) comprend au moins l'un parmi :

   une structure métamatérielle (901),
   un hologramme de volume,
   une structure optique diffractante,
   une unité de modulation spatiale de lumière, SLM.

9. Dispositif d'imagerie (200) selon l'une quelconque des revendications 1 à 8, dans lequel :

   l'élément de déviation (101) comprend la structure de méta-surface (901), et
   un facteur d'expansion angulaire, qui est défini en fonction du premier angle ($\theta_i$) et du second angle ($\theta_o$), est déterminé par la structure de méta-surface (901).

10. Dispositif d'imagerie (200) selon l'une quelconque des revendications 8 ou 9, dans lequel :
la structure de méta-surface (901) comprend une pluralité de méta-atomes (902), chaque méta-atome (902) ayant une taille de l'ordre d'une longueur d'onde de la lumière du ou des faisceaux lumineux, et la structure de méta-surface (901) est configurée pour :
modifier un front d'onde incident de chaque faisceau lumineux ($102_i$, $103_i$) en fonction de l'ajout local d'une impulsion prédéfinie par chaque méta-atome (902) spécifique au front d'onde.

11. Dispositif d'imagerie (200) selon l'une des revendications 1 à 10, comprenant en outre :

   une ouverture configurée pour faire passer un ou plusieurs faisceaux lumineux, dans lequel l'au moins un dispositif de déviation de lumière (100) est configuré pour recevoir le ou les faisceaux lumineux incidents ($102_i$, $103_i$) passant par l'ouverture et dévier chaque faisceau lumineux incident ($102_i$, $103_i$) au moins en partie pour obtenir le ou les faisceaux lumineux déviés ($102_o$, $103_o$),
   un système optique configuré pour replier le ou les faisceaux lumineux déviés ($102_o$, $103_o$) et former une image optique, et
   un capteur d'image configuré pour générer une image en fonction de l'obtention du ou des faisceaux lumineux déviés ($102_o$, $103_o$).

12. Dispositif d'imagerie (200) selon l'une des revendications 1 à 11, comprenant en outre :

   un premier dispositif de déviation de lumière (100) avec un premier axe de déviation, X, configuré pour, sur son premier axe de déviation, X, correspondant,
   comprimer la première largeur ($h_i$) d'un faisceau lumineux incident ($102_i$) en seconde largeur ($h_o$) du faisceau lumineux dévié ($102_o$) correspondant, et/ou
   élargir le premier angle ($\theta_i$) entre deux faisceaux lumineux incidents ($102_i$, $103_i$) en un second angle ($\theta_o$) entre les faisceaux lumineux déviés ($102_o$, $103_o$) correspondants, et/ou
   un second dispositif de déviation de lumière (100) avec un second axe de déviation, Y, configuré pour, sur son second axe de déviation, Y, correspondant,
   comprimer la première largeur ($h_i$) d'un faisceau lumineux incident ($102_i$) en seconde largeur ($h_o$) du faisceau lumineux dévié ($102_o$) correspondant, et/ou
   élargir le premier angle ($\theta_i$) entre deux faisceaux lumineux incidents ($102_i$, $103_i$) en un second angle ($\theta_o$) entre les faisceaux lumineux déviés ($102_o$, $103_o$) correspondants.

13. Dispositif d'imagerie (200) selon la revendication 12, dans lequel :

   le facteur de compression de faisceau est différent pour le premier dispositif de déviation de lumière et pour le second dispositif de déviation de lumière, et/ou
un facteur d'expansion angulaire est différent pour le premier dispositif de déviation de lumière et pour le second
dispositif de déviation de lumière.

**14.** Dispositif d'imagerie (200) selon la revendication 12 ou 13, dans lequel :
le premier axe de déviation, X, est orthogonal en cascade par rapport au second axe de déviation, Y.

EP 3 994 505 B1

**FIG. 1**

FIG. 2

EP 3 994 505 B1

FIG. 3

EP 3 994 505 B1

**FIG. 4**

FIG. 5

EP 3 994 505 B1

**FIG. 6**

EP 3 994 505 B1

**FIG. 7**

EP 3 994 505 B1

**FIG. 8**

EP 3 994 505 B1

**FIG. 9**

**FIG. 10a**

**FIG. 10b**

EP 3 994 505 B1

FIG. 11

**FIG. 12**

EP 3 994 505 B1

EP 3 994 505 B1

$\underline{1300}$

1301 — Receive one or more incident light beams and deflecting each incident light beam at least partly to obtain one or more deflected light beams.

1302 — Change a first width of each incident light beam into a second width of the corresponding deflected light beam, and/or

1303 — Change a first angle between two incident light beams into a second angle between the corresponding deflected light beams.

**FIG. 13**

FIG. 14

EP 3 994 505 B1

phone side view

imaging system

bump

1500

1501

**FIG. 15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009005112 A1
- WO 0055676 A1
- WO 2016140720 A2
- WO 2018222944 A1